# EUROPÄISCHE PATENTSCHRIFT

(11) **EP 4 400 760 B1**
(45) Veröffentlichungstag und Bekanntmachung des Hinweises auf die Patenterteilung: **17.09.2025**
(21) Anmeldenummer: 23151491.0
(22) Anmeldetag: 13.01.2023
(51) Int. Cl.: F17C 6/00, F17C 9/00

(54) **KRYOSPEICHERSYSTEM**
CRYOSTORAGE SYSTEM
SYSTÈME DE STOCKAGE CRYOGÉNIQUE

(43) Veröffentlichungstag der Anmeldung: 17.07.2024
(73) Patentinhaber: MAGNA STEYR Fahrzeugtechnik GmbH & Co KG, 8041 Graz (AT)
(72) Erfinder: BARTLOK, Guido, 8010 Graz (AT)
(74) Vertreter: Zangger, Bernd

(56) Entgegenhaltungen:
- EP-A1- 3 236 132
- DE-A1- 102019 205 601
- DE-A1- 4 320 556
- US-A1- 2012 317 995
- US-B2- 11 415 084
- US-B2- 6 526 760

## Beschreibung

### Gebiet der Erfindung

Die vorliegende Erfindung betrifft ein Kryospeichersystem, umfassend einen Kryobehälter zur Speicherung von Wasserstoff, insbesondere als mobiles Kryospeichersystem zur Speicherung von Wasserstoff für den Antrieb eines Kraftfahrzeuges.

### Stand der Technik

Es ist bekannt, dass mobile Kryospeichersysteme verwendet werden, um den für den Antrieb erforderlichen Wasserstoff in einem Kraftfahrzeug mitzuführen.

Zur Entnahme aus dem Speicherbehälter wird Druck in dessen Innerem erhöht, was üblicherweise durch Beheizen des Behälterinhaltes, entweder mit Fremdenergie oder durch einen im Innentank des Speicherbehälters angeordneten Wärmeübertrager erfolgt, der von bereits verdampftem Gas durchströmt ist.

In den Gebrauchsmuster AT 009 291 U1 und AT 010 015 U1 sind Entnahmevorrichtungen beschrieben, die die mit der üblichen Vorrichtung verbundenen Nachteile dadurch teilweise beheben, das gasförmiges Gas von einer Pumpe rückgeführt und in den Speicherbehälter entweder in den Gasraum oder bodennah in die Flüssigkeit eingeblasen wird.

Alternativ kann eine Fluidförderung durch eine Flüssigkeitspumpe mit Linearantrieb und Konditionierung mittels nachgeschaltetem Wärmeübertrager erfolgen, wie aus der US 2012317995A1 bekannt.

Allerdings haben bekannte Lösungen einige Nachteile, zum Beispiel:
- Bei bekannten Lösungen muss der Betriebsdruck im Innentank größer sein als der Versorgungsdruck für den Verbraucher. Dadurch verringert sich die nutzbare Speicherkapazität des Innenbehälters, da die Dichte des tiefkalten Flüssiggases mit steigendem Druck abnimmt.
- Ein höherer normaler Arbeitsdruck im Innentank verringert die Druckdifferenz bis zum Ansprechdruck des Boil-off Ventils, das heißt, die Druckaufbauzeit verringert sich.
- Druckaufbau im Innentank ist mit einem passiven System (geschlossener Innentank-Wärmeübertrager) nur bei gleichzeitiger Entnahme für den Verbraucher möglich. Das bedeutet in der Praxis, dass nach dem Betanken - das bei einem unter dem Betriebsdruck liegenden Druck erfolgt - dem Verbraucher zunächst nur sehr kleine Gasmengen zugeführt werden können.
- Bei einem alternativen Konzept, einem sog. aktiven System, wird ein leistungsstarkes Gebläse verwendet, dass außerhalb des Systems angeordnet ist und über eine Rohrleitungsverbindung warmen Wasserstoff mit geringer Druckdifferenz in den Innentank fördert und dadurch dessen Druckniveau erhöht, unabhängig von einer gleichzeitigen Entnahme für den Verbraucher. Gebläse und erforderliche Hochvoltelektronik erfordert Leistungsaufnahmen im KW-Bereich.

Aus der EP 3 236 132 A1 ist ein Tanksystem bekannt, umfassend einen Behälter zur Aufnahme eines Zweiphasengemischs aus Kryogas und Kryoflüssigkeit mit einem ersten Drucksensor zum Messen des Behälterdrucks, eine von einem Kopfbereich des Behälters ausgehende erste Entnahmeleitung für Kryogas und eine von einem Bodenbereich des Behälters ausgehende zweite Entnahmeleitung für Kryoflüssigkeit, eine Speiseleitung zum Speisen eines Verbrauchers, in welche beide Entnahmeleitungen münden, und ein Heizelement, durch welches die Speiseleitung geführt ist, wobei eine an den ersten Drucksensor angeschlossene Ventilschaltung, welche zumindest zwischen einem ersten Schaltzustand, in welchem die erste Entnahmeleitung geöffnet und die zweite Entnahmeleitung zumindest in Richtung des Verbrauchers geschlossen ist, und einem zweiten Schaltzustand, in welchem die erste Entnahmeleitung zumindest in Richtung des Verbrauchers geschlossen und die zweite Entnahmeleitung geöffnet ist, umschaltbar ist, wobei die Ventilschaltung den ersten Schaltzustand einnimmt, wenn der gemessene Behälterdruck größer als ein vorgegebener erster Schwellwert ist, und den zweiten Schaltzustand einnimmt, wenn der gemessene Behälterdruck kleiner als der erste Schwellwert ist.

Dokument US 11 415 084 B2 offenbart einen Lagerbehälter für kryogenes Flüssiggas, umfassend einen Innentank, der einen Raum zur Lagerung des kryogenen Flüssiggases definiert; und ein Extraktionssystem, das strömungstechnisch mit dem Innentank verbunden ist, wobei das Extraktionssystem Folgendes umfasst: eine Entnahmeleitung, deren erstes Ende strömungstechnisch mit dem Innentank verbunden ist und deren zweites Ende strömungstechnisch mit einer Verzweigungsstelle verbunden ist, eine Verbraucherleitung, deren erstes Ende strömungstechnisch mit der Verzweigungsstelle und deren zweites Ende strömungstechnisch mit einem Verbraucher für tiefkaltes Flüssiggas verbunden ist, um die Entnahme des tiefkalten Flüssiggases durch den Verbraucher für tiefkaltes Flüssiggas zu erleichtern, eine Rückführleitung, deren erstes Ende strömungstechnisch mit der Verzweigungsstelle und deren zweites Ende strömungstechnisch mit dem Innentank verbunden ist, um die Rückführung des kryogenen Flüssiggases zum Innentank zu erleichtern, einen Wärmetransmitter, der in der Entnahmeleitung stromaufwärts von der Verzweigungsstelle angeordnet ist, um das aus dem Innentank entnommene kryogene Flüssiggas zu erwärmen und in eine Gasphase zu überführen, einen in der Entnahmeleitung stromaufwärts der Verzweigungsstelle und stromabwärts des Wärmetransmitters angeordneten Verdichter zum Verdichten des gasförmigen kryogenen Flüssiggases, wobei ein erster Strom des verdichteten kryogenen Flüssiggases über die Verbraucherleitung zum kryogenen Flüssiggasverbraucher geleitet wird und ein zweiter Strom des verdichteten kryogenen Flüssiggases über die Rücklaufleitung zum Innentank zurückgeführt wird.

### Zusammenfassung der Erfindung

Es ist eine Aufgabe der Erfindung, ein Kryospeichersystem der genannten Art anzugeben, das zumindest einige der genannten Probleme reduzieren kann und insbesondere ein Kryospeichersystem, umfassend einen Kryobehälter zur Speicherung von Wasserstoff, anzugeben, dass auf kostengünstige Art einen günstigen Betriebsdruck in einem Innentank und eine zuverlässige Entnahme des Mediums aus dem Innentank, sowie eine zuverlässige Betankung des Innentanks ermöglicht.

Die Lösung der Aufgabe erfolgt durch ein Kryospeichersystem mit den Merkmalen gemäß Anspruch 1.

Das Kryospeichersystem umfasst einen Kryobehälter zur Speicherung von Wasserstoff, mit einem Innentank und einem Außenbehälter, wobei im Innentank des Kryobehälters mindestens eine Kryopumpe angeordnet ist, wobei die Kryopumpe flüssigen und/oder gasförmigen Wasserstoff ein- oder mehrstufig über eine Entnahmeleitung zu einem Verbraucher fördert, mit höherem Druck als dem Druck im Innentank, wobei der Innentank über eine Betankungsschnittstelle betankt werden kann, wobei die Betankung zumindest abschnittsweise über die Entnahmeleitung erfolgt, wobei die Betankung über ein Wechselventil in den Innentank erfolgt.

Erfindungsgemäß verfügt ein Kryospeichersystem im Innentank eines Kryobehälters über mindestens eine Kryopumpe. Durch die Kryopumpe kann flüssiger und/oder gasförmiger Wasserstoff tiefkalt dem Innentank entnommen und vorzugsweise einem Wärmeübertrager zugeführt werden, der den Wasserstoff erwärmt und sodann weiter zu einem Verbraucher fördert. Die Förderung zum Verbraucher kann dabei mit einem Druck erfolgen, der höher ist, als der Druck im Innentank des Kryospeichersystems.

Die Kryopumpe ist im Innentank des Kryobehälters angeordnet, also in einem im Normalbetrieb tiefkalten Bereich des Kryospeichersystems. Daher ist die Kryopumpe im Normalbetrieb vollständig von kryogenem Fluid umgeben. Der Antrieb der Kryopumpe ist dazu eingerichtet, bei tiefkalten Temperaturen zu arbeiten.

Die Betankung einer solchen Vorrichtung erfolgt über eine Betankungsschnittstelle, wobei erfindungsgemäß die Betankung zumindest abschnittsweise über die Entnahmeleitung erfolgt, also zumindest abschnittsweise über die selbe Leitung, über welche auch durch die Kryopumpe Wasserstoff dem Innentank entnommen werden kann. Die Betankung erfolgt erfindungsgemäß über ein Wechselventil in den Innentank. Hierdurch ist es möglich das Kryospeichersystem über die Entnahmeleitung zu betanken, dabei aber die Kryopumpe im Innentank zu umgehen.

Durch die Verwendung einer Kryopumpe im Innentank können folgende Vorteile erreicht werden: Der Betriebsdruck im Innentank lässt sich minimieren und kann kleiner sein als der kleinstmögliche Versorgungsdruck des Verbrauchers. Ein geringer Betriebsdruck im Innentank ermöglicht längere Druckaufbauzeiten oder geringere Designdrücke und damit geringere Wandstärken, das heißt leichtere Innentanks bzw. komplexere Speicherbehälter-Geometrien sind realisierbar. Die Backgas-Verluste bei der Flüssiggas-Betankung können durch den geringeren Innentankdruck reduziert werden. Die verbesserten thermodynamischen Verhältnisse im Innentank ermöglichen höhere Betankungsgeschwindigkeiten. Die Änderung der Förderhöhe (Förderdruck) beziehungsweise der Fördermenge wird beschleunigt bzw. erleichtert. Der Energieverbrauch für den Betrieb der Kryo-Pumpe, die gänzlich der kryogenen Fluidtemperatur ausgesetzt ist, ist deutlich geringer als für ein aktives System mit Gebläse oder mit Pumpen bzw. Kompressoren deren Antrieb und / oder Verdichtungsarbeit etwa bei Umgebungstemperatur stattfindet. Bei geeigneter Konfiguration kann wahlweise Flüssigkeit und/oder Gas gefördert werden. Das ermöglicht eine Abstimmung zwischen Entnahmemassenstrom und Druckabsenkung durch Volumenarbeit.

Erfindungsgemäß ist in einer das geförderte Medium ableitenden Druckleitung der Kryopumpe das Wechselventil angeordnet, wobei die das geförderte Medium ableitende Druckleitung am Wechselventil in eine Einlassleitung in den Innentank übergeht, so dass am Wechselventil, je nach Zustand des Wechselventils, entweder der Zugang zur Druckleitung geöffnet ist und der Zugang zur Einlassleitung geschlossen ist oder der Zugang zur Druckleitung geschlossen ist und der Zugang zur Einlassleitung geöffnet ist.

Die Einlassleitung in den Innentank ist eine Leitung, die in den Innentank des Kryospeichersystems mündet, bevorzugt in Nähe der Decke des Innentanks und/oder in einen Bereich des Innentanks, in dem sich üblicherweise gasförmiger Wasserstoff befindet.

Vorzugsweise weist das Wechselventil einen Zugang zur Entnahmeleitung auf, der sowohl bei geöffnetem Zugang zur Druckleitung als auch bei geöffnetem Zugang zur Einlassleitung geöffnet ist. Das Wechselventil weist somit drei Eingänge auf, nämlich zur Entnahmeleitung, zur Einlassleitung und zur Druckleitung der Kryopumpe.

Vorzugsweise weist das Wechselventil einen integrierten Schwebekörper auf, wobei das Eigengewicht des Schwebekörpers bei einer Betankung in einer unteren End-Position hält, so dass die Einlassleitung zur Befüllung des Innentanks freigegeben ist. Bei einer Inbetriebnahme der Kryopumpe wird der Schwebekörper durch den Förderstrom angehoben, so dass er die Einlassleitung zum Innentank verschließt und der Förderstrom ausschließlich zum Verbraucher gepumpt wird.

Bevorzugt ist die Kryopumpe als Linearpumpe ausgebildet, die beidseitig fördert.

Besonders bevorzugt ist der linke und/oder der rechte Förderstrom der Linearpumpe dazu ausgebildet, wahlweise gasförmigen oder flüssigen Wasserstoff zu fördern, bevorzugt über ein pumpnahes Absperrventil für das Umschalten von LH2 auf GH2.

Bevorzugt ist der Kryobehälter dazu eingerichtet, dass ein Teilstrom des erwärmten Wasserstoffs, also des entnommenen Wasserstoffs nach einem Wärmeübertrager, über eine Gasrückführleitung in den Innentank zurückgeführt werden kann, um den Innentankdruck zu erhöhen und bevorzugt auf einem Mindestdruck zu halten. Vorzugsweise ist in der Gasrückführleitung ein Absperrventil für die Gasrückführung zum Innentank angeordnet.

Vorzugsweise ist ein Druckminderer, bevorzugt mit nachgeschaltetem Drucksicherheitsventil, in der Gasrückführleitung für die Gasrückführung zum Innentank verbaut. Hierdurch kann der Druck für die Gasrückführung in den Innentank begrenzt werden.

Bevorzugt ist zwischen der Kryopumpe und dem Verbraucher ein Pufferbehälter für warmen Wasserstoff angeordnet. Hierdurch kann eine eventuell auftretende schwankende Förderleistung der Kryopumpe ausgeglichen werden.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines nicht erfindungsgemäßen Kryospeichersystems.
- Fig. 2: ist eine schematische Darstellung eines Teiles des nicht erfindungsgemäßen Kryospeichersystems gemäß Fig. 1 in einer anderen Ausführungsvariante.
- Fig. 3: ist eine schematische Darstellung eines Teiles des nicht erfindungsgemäßen Kryospeichersystems gemäß Fig. 1 in einer anderen Ausführungsvariante.
- Fig. 4: ist eine schematische Darstellung eines nicht erfindungsgemäßen Kryospeichersystems in einer anderen Ausführungsvariante.
- Fig. 5: ist eine schematische Darstellung eines nicht erfindungsgemäßen Kryospeichersystems in einer anderen Ausführungsvariante.
- Fig. 6: ist eine schematische Darstellung eines erfindungsgemäßen Kryospeichersystems in einer anderen Ausführungsvariante.
- Fig. 7: ist eine schematische Detaildarstellung eines Wechselventils eines erfindungsgemäßen Kryospeichersystems gemäß Fig. 6 in einem ersten Zustand.
- Fig. 8: ist eine schematische Detaildarstellung eines Wechselventils eines erfindungsgemäßen Kryospeichersystems gemäß Fig. 6 in einem zweiten Zustand.

### Detaillierte Beschreibung der Erfindung

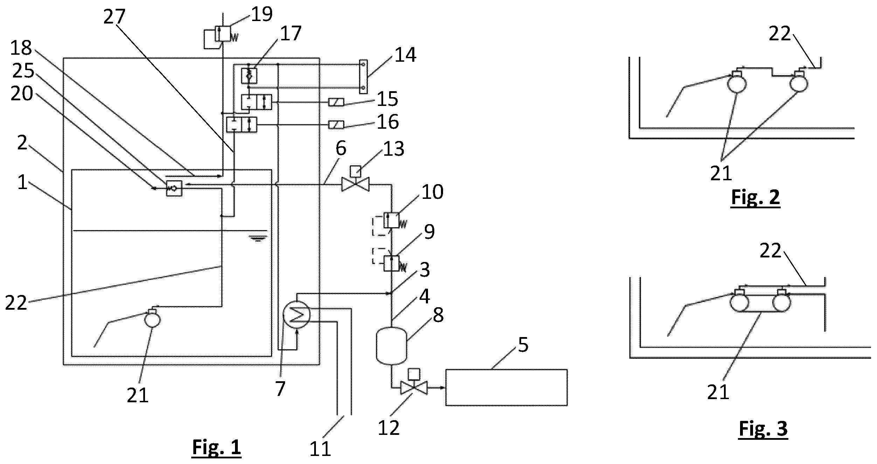

In Fig. 1 ist ein nicht erfindungsgemäßes Kryospeichersystem dargestellt, welches einen Kryobehälter umfasst, der einen Innentank 1 und einen Außenbehälter 2 umfasst, mit einem Isolationsraum als Zwischenraum zwischen Innentank 1 und Außenbehälter 2.

Das Kryospeichersystem kann tiefkalte kryogene Flüssigkeit aus dem Innentank 1 mittels einer leistungsgesteuerten druckerhöhenden Kryopumpe 21 über eine Druckleitung 22 der Kryopumpe, die in eine Entnahmeleitung 27 übergeht und an einer Leitungsverbindung 3 in eine Versorgungsleitung 4 mündet, zu einem Verbraucher 5 fördern.

Die Kryopumpe 21 ist vollständig von kryogenem Fluid umgeben, d.h. auch der Antrieb der Pumpe 21 arbeitet bei tiefkalten Temperaturen, wodurch eine geringe elektrische Leistungsaufnahme für die Kaltgasverdichtung ermöglicht wird.

Gas kann zudem durch Öffnen eines GH2 Tankventils 15 und/oder Flüssigkeit durch Öffnen eines LH2 Tankventils 16 aus dem Innentank 1 in die Entnahmeleitung 27 strömen. Gas kann dabei über eine kombinierte Sicherheits- und Gasentnahmeleitung 18 dem Innentank 1 entnommen werden. Nach dem GH2 Tankventil 15 kann ein Rückschlagvenil 17 für die Gasentnahme vorgesehen sein. Aus der kombinierte Sicherheits- und Gasentnahmeleitung 18 kann Gas auch durch ein Druckentlastungssicherheitsventil 19 nach außen abgegeben werden.

Das kryogene Fluid, insbesondere flüssiger Wasserstoff, wird nach der Entnahme aus dem Innentank 1, insbesondere nach der Kryopumpe 21 und nach den Tankventilen 15, 16, über einen Wärmeübertrager 7 geleitet, dabei durch Wärmezufuhr, vorzugweise mittels Kühlwassers 11 des Verbrauchers 5, vollständig in die Gasphase überführt und zugleich für den Verbraucher 5 ausreichend erwärmt. Die Kryopumpe 21 fördert den Wasserstoff bei Bedarf mit höherem Druck zum Verbraucher 5 als im Innentank 1 vorliegt. Durch die Entnahme von Kraftstoff aus dem Kryospeichersystem sinkt der Druck und die Kraftstoffmenge in dessen Innentank 1.

Um eine eventuelle auftretende schwankende Förderleistung der Kryopumpe 21 auszugleichen, kann zusätzlich zwischen Pumpe 21 und Verbraucher 5, insbesondere in der Versorgungsleitung 4, ein Pufferbehälter 8 für warmen Wasserstoff angeordnet werden. In der Versorgungsleitung 4 kann vor dem Verbraucher 5 ein Absperrventil 12 für die H2-Versorgung zum Verbraucher 5 angeordnet sein.

Das Kryospeichersystem kann über eine Betankungsschnittstelle 14 betankt werden. Die Betankung kann abschnittsweise über die Entnahmeleitung 27 und eine Einlassleitung 20 in den Innentank 1 erfolgen, bevorzugt in den Bereich gasförmigen Wasserstoffs des Innentanks 1.

Wie in Fig. 1 - 5 dargestellt, kann ein federbelastetes Rückschlagventil 25 in der Einlassleitung 20 in den Innentank 1 angeordnet sein, wobei die Einlassleitung 20 von einer Leitung abzweigt, die durch eine das von der Kryopumpe 21 geförderte Medium ableitenden Druckleitung 22 und der Entnahmeleitung 27 gebildet wird.

Die Betankung kann dann über die Entnahmeleitung 27 und über das federbelastete Rückschlagventil 25 und über die Einlassleitung 20 in den Innentank 1 erfolgen.

Besteht Bedarf den Druck im Innentank 1 des Kryospeichersystems zu erhöhen bzw. zu halten, kann Gas über Ventil 13 in einer Gasrückführleitung 6, die an der Leitungsverbindung 3 von der Entnahmeleitung 27 nach dem Wärmetauscher 7 abzweigt, zurück in den Innentank 1 transferiert werden. Um den Druck für die Gasrückführung in den Innentank 1 zu begrenzen, kann bei Bedarf ein Druckminderer 9 mit nachgeschaltetem Drucksicherheitsventil 10 in der Gasrückführleitung 6 verbaut werden.

Während Fig. 1 eine einstufige Druckerhöhung mit Gasrückführung zeigt, zeigt die Fig. 2 eine Variante der Erfindung mit einer seriellen Pumpanordnung für eine zweistufige Druckerhöhung mit Gasrückführung.

Besteht Bedarf für sehr hohe Versorgungsdrücke (überkritisch, zum Beispiel mehr als 20 bar) kann der ersten Kryopumpstufe mindestens eine weitere Kryopumpstufe in Reihe nachgeschaltet werden (vgl. Fig. 2). Dabei wird der Enddruck der ersten Kryopumpe 21 zum Ansaugdruck der zweiten Kryopumpe 21. Die serielle Verschaltung ermöglicht höhere Enddrücke bei gleichzeitig niedriger Energieaufnahme für die Verdichtung des Kaltgases. Alternativ kann einer Kryopumpe 21 und dem Wärmeübertrager 7 auch außerhalb vom Tanksystem ein warmer Kompressor für die finale Verdichtung folgen.

Fig. 3 zeigt an Stelle der Förderpumpe eine besondere Ausführung der Pumpe in Form einer linear angetriebenen doppelseitig-verdrängenden Kryopumpe 21, mit zwei sich gegenüberliegenden Verdrängungsarbeitsräumen, mit jeweils separaten Ansaug- und Auslassstutzen für eine beidseitige Fluidförderung. Die Kryopumpe 21 ist somit als Linearpumpe ausgebildet, die das gespeicherte Medium beidseitig fördert - in Fig. 3 lediglich in Form des flüssigen Mediums.

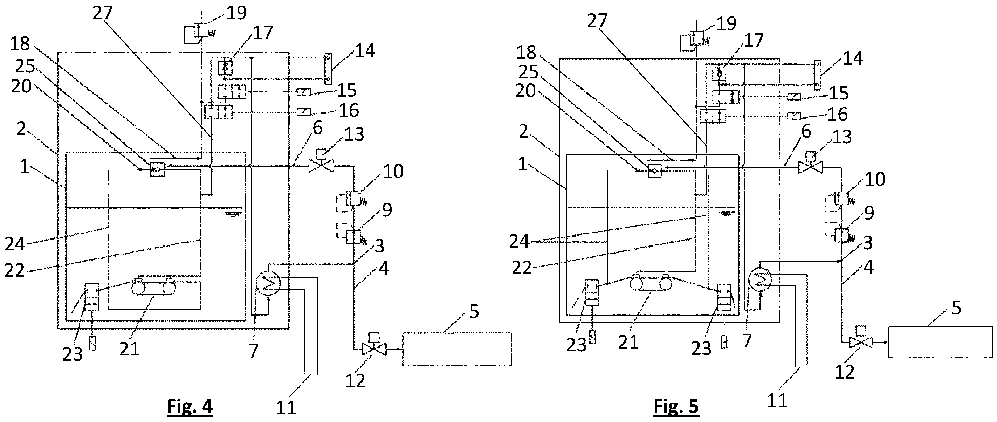

Fig. 4 zeigt eine Variante einer linear angetriebenen doppelseitig-verdrängenden Kryopumpe 21 mit separaten Ansaugstutzen (wie Fig. 3), jedoch mit einseitig (in Fig. 4 an der linken Seite der Linearförderpumpe) einem Schaltventil 23, zur wahlweisen Förderung von Flüssigkeit oder Gas. An der gegenüberliegenden zweiten Seite der Pumpe erfolgt nur eine Flüssigkeitsförderung. Im Übrigen ist das Kryospeichersystem gleich ausgebildet, wie die Varianten der Fig. 1 bis Fig. 3.

Durch Einbau von zusätzlichem Equipment im Innentank (Kryoventil(e), Rohrleitung(en)) kann durch gesteuerte wechselnde Ventilschaltstellung wahlweise Gas oder Flüssigkeit zum jeweiligen Ansaugstutzen zuströmen. Durch die Ventilsteuerung 23, zum Beispiel in Fig. 4, ist das Verhältnis von Gas- zu Flüssigkeitsentnahme veränderbar und somit auch das Verhältnis von Massestrom zum Verbraucher 5 zur Druckabsenkung im Innentank 1. Die Auswahlmöglichkeit zwischen Gas- oder Flüssigkeitsentnahme bietet einen zusätzlichen Freiheitsgrad, denn damit ist das Verhältnis von Massestrom zum Verbraucher 5 zur Druckabsenkung im Innentank 1 nicht mehr annähernd konstant und die jeweilige Größe nur über die Pumpfrequenz veränderbar, sondern jeweils flexibel.

Bei geöffnetem Ventil 23 flutet LH2 das Rohr bis zum Ansaugstutzen der Kryopumpe 21 und die Gasentnahmeleitung 24 hinauf bis auf Höhe des LH2-Levels (als Folge des hydrostatischen Ausgleichs). Wird das Ventil 23 geschlossen, wird zunächst der restliche LH2 aus der Rohrleitung des Ansaugstutzens gefördert, bevor gasförmiger Wasserstoff von oben durch die Gasentnahmeleitung 24 zum Ansaugstutzen nachströmt.

Gas kann somit über eine Gasentnahmeleitung 24 als verlängerter Ansaugstutzen der Kryopumpe 21 aus dem Innentank 1 entnommen werden. Durch ein pumpnahes Schaltventil 23 für das Umschalten von LH2 auf GH2, kann wahlweise Flüssigkeit oder Gas aus dem Innentank 1 durch die Pumpe 21 gefördert werden.

Wird eine Linearpumpe (Fig. 3 - 6) eingesetzt, die beidseitig fördert, ergeben sich verschiedene mögliche Varianten der Extraktion: Der linke und rechte Förderstrom können beispielsweise beide lediglich LH2, also flüssigen Wasserstoff, fördern, oder eine der beiden Seiten, beispielsweise links, wahlweise GH2 oder LH2 und die andere Seite lediglich LH2, oder beide Seiten können wahlweise GH2 oder LH2, also Gas oder Flüssigkeit, fördern, so dass das geförderte Medium insgesamt von 100% GH2 bis zu 100% LH2-Förderung variabel ist.

Fig. 4 zeigt von diesen Möglichkeiten eine Variante mit linear angetriebener doppelseitig-verdrängender Kryopumpe 21 mit verbundenen Ansaugstutzen, mit wahlweiser Förderung von Flüssigkeit oder Gas auf einer, nämlich hier der linken, Pumpenseite.

Fig. 5 zeigt eine Variante einer linear angetriebenen doppelseitig-verdrängenden Kryopumpe 21 mit separaten Ansaugstutzen, die beide wahlweise zur Förderung von Flüssigkeit und/oder Gas eingerichtet sind. An jedem der beiden Ansaugstutzen der Kryopumpe 21 ist jeweils ein Schaltventil 23 für das Umschalten von LH2 auf GH2 angeordnet.

In den bisher beschriebenen Anordnungen ermöglicht jeweils ein federbelastetes Rückschlagventil 25 in der Befüllleitung im Innentank die Betankung mit Umgehung der Pumpe 21 und bevorzugt in den Gasraum. Es besteht dabei die Anforderung, dass der Betankungsdruck für das Öffnen des federbelasteten Rückschlagventils 25 höher ist, als der maximale Förderdruck der Kryopumpe 21. Das Rückschlagventil 25 bewirkt zwar einen zusätzlichen Strömungswiderstand für die Betankung aber vermeidet einen für den Förderstrom der Kryopumpe 21 zum Verbraucher 5.

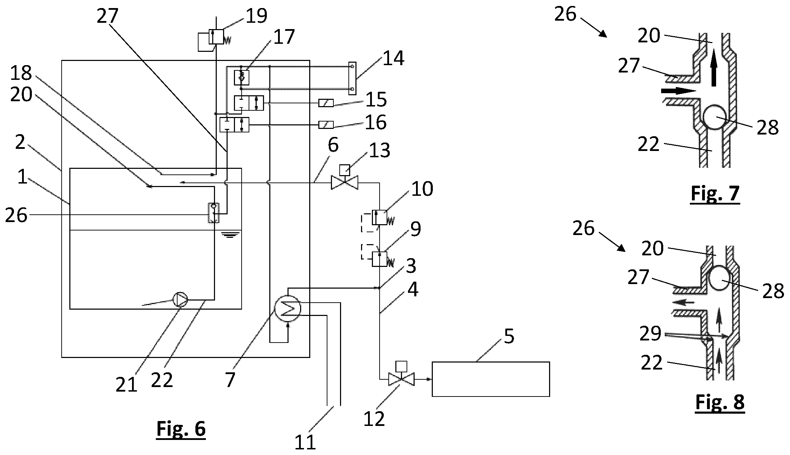

Fig. 6 zeigt eine andere, erfindungsgemäße Konfiguration der Ventile zur Betankung, nämlich ein Wechselventil 26, das bevorzugt im Innentank 1 angeordnet ist, und in Fig. 1 mit einer Schwebekörperposition bei Entnahme durch die Kryopumpe 21 dargestellt ist. Ein federbelastetes Rückschlagventil 25 ist in dieser Ausführungsform nicht erforderlich.

In der das geförderte Medium ableitenden Druckleitung 22 der Kryopumpe 21 ist das Wechselventil 26 angeordnet, wobei die das geförderte Medium ableitende Druckleitung 22 am Wechselventil 26 in die Einlassleitung 20 in den Innentank 1 übergeht, so dass am Wechselventil 26, je nach Zustand des Wechselventils 26, entweder der Zugang zur Druckleitung 22 geöffnet ist und der Zugang zur Einlassleitung 20 geschlossen ist oder der Zugang zur Druckleitung 22 geschlossen ist und der Zugang zur Einlassleitung 20 geöffnet ist.

Das Wechselventil weist somit einen Zugang zur Entnahmeleitung 27 auf, der sowohl bei geöffnetem Zugang zur Druckleitung 22 als auch bei geöffnetem Zugang zur Einlassleitung 20 geöffnet ist.

Das Wechselventil 26 mit integriertem Schwebekörper 28 (vgl. Fig. 6 - 8) stellt eine Realisation einer Umschaltung zwischen Entnahme und Betankung dar. Das Wechselventil 26 ist an der Verbindungsstelle zwischen Druckleitung 22, Entnahmeleitung 27 und Einlassleitung 20 in den Innentank 1 angeordnet.

Der Schwebekörper 28 verbleibt bedingt durch sein Eigengewicht bei Betankung (Fig. 7) in der unteren End-Position und gibt die Einlassleitung 20 zur Befüllung des Innentanks frei. Durch Inbetriebnahme der Kryopumpe 21 wird der Schwebekörper 28 durch den Förderstrom derart angehoben/verlagert, dass er den Einlass der Befüllleitung zum Innentank 1, also der Einlassleitung 20, verschließt (Fig. 8), sodass der Förderstrom ausschließlich zum Verbraucher 5 gepumpt wird.

Die Vorteile dieser Alternative sind, dass die Betankung mit geringerem Strömungswiderstand erfolgen kann und Betankungsdruck und maximaler Förderdruck der Kryopumpe 21 voneinander unabhängig sind. Allerdings ergibt sich durch den im Wechselventil 26 integrierten Schwebekörper 28 ein zusätzlicher Strömungswiderstand für den Förderstrom der Kryopumpe 21 zum Verbraucher 5.

Beide Konfigurationen der Umschaltfunktion, nämlich federbelastetes Rückschlagventil 25 und Wechselventil 26, ermöglichen eine Druckentlastung der angrenzenden Leitungen und der Kryopumpe 21 in den Innentank 1 hinein, wenn sich eingeschlossenes Fluid durch Erwärmung ausdehnt.

Fig. 7 zeigt somit die Strömung im Wechselventil 26 bei Betankung.
Das Eigengewicht des Schwebekörpers 28 hält bei einer Betankung den Schwebekörper 28 in einer unteren End-Position, so dass die Einlassleitung 20 zur Befüllung des Innentanks 1 freigegeben ist.

Fig. 8 zeigt die Strömung im Wechselventil 26 bei Entnahme über die Kryopumpe 21. Bei einer Inbetriebnahme der Kryopumpe 21 wird der Schwebekörper 28 durch den Förderstrom vom Ventilsitz 29 angehoben, so dass er die Einlassleitung 20 zum Innentank 1 verschließt und der Förderstrom ausschließlich zum Verbraucher 5 gepumpt wird.

### Bezugszeichenliste

- 1: Innentank des Primärspeichersystems
- 2: Außenbehälter
- 3: Leitungsverbindung
- 4: Versorgungsleitung
- 5: Verbraucher
- 6: Gasrückführleitung
- 7: Wärmeübertrager
- 8: Pufferbehälter
- 9: Druckminderer
- 10: Drucksicherheitsventil
- 11: Kühlwasserkreislauf
- 12: Absperrventil für H2 Versorgung zum Verbraucher
- 13: Absperrventil für Gasrückführung zum Innentank
- 14: Schnittstelle für Betankung
- 15: GH2 Tankventil
- 16: LH2 Tankventil
- 17: Rückschlagventil für die Gasentnahme
- 18: kombinierte Sicherheits- und Gasentnahmeleitung
- 19: Druckentlastungssicherheitsventil
- 20: LH2 Einlassleitung in den Innentank
- 21: Kryopumpe(n)
- 22: Druckleitung der Kryopumpe
- 23: Pumpnahes Schaltventil für das Umschalten von LH2 auf GH2
- 24: Gasentnahmeleitung als verlängerter Ansaugstutzen der Kryopumpe
- 25: Weiteres Rückschlagventil
- 26: Wechselventil
- 27: Entnahmeleitung
- 28: Schwebekörper
- 29: Ventilsitz

## Patentansprüche

1. Kryospeichersystem, umfassend einen Kryobehälter zur Speicherung von Wasserstoff, mit einem Innentank (1) und einem Außenbehälter (2),
wobei im Innentank (1) des Kryobehälters mindestens eine Kryopumpe (21) angeordnet ist, wobei die Kryopumpe (21) flüssigen und/oder gasförmigen Wasserstoff ein- oder mehrstufig über eine Entnahmeleitung (27) zu einem Verbraucher (5) fördert, mit höherem Druck als dem Druck im Innentank (1), wobei der Innentank (1) über eine Betankungsschnittstelle (14) betankt werden kann, **dadurch gekennzeichnet, dass** die Betankung zumindest abschnittsweise über die Entnahmeleitung (27) erfolgt, und
dass die Betankung über ein Wechselventil (26) in den Innentank (1) erfolgt, wobei in einer das geförderte Medium ableitenden Druckleitung (22) der Kryopumpe (21) das Wechselventil (26) angeordnet ist, wobei die das geförderte Medium ableitende Druckleitung (22) am Wechselventil (26) in eine Einlassleitung (20) in den Innentank (1) übergeht, so dass am Wechselventil (26), je nach Zustand des Wechselventils (26), entweder der Zugang zur Druckleitung (22) geöffnet ist und der Zugang zur Einlassleitung (20) geschlossen ist oder der Zugang zur Druckleitung (22) geschlossen ist und der Zugang zur Einlassleitung (20) geöffnet ist.

2. Kryospeichersystem nach Anspruch 1,
**dadurch gekennzeichnet , dass** das Wechselventil einen Zugang zur Entnahmeleitung (27) aufweist, der sowohl bei geöffnetem Zugang zur Druckleitung (22) als auch bei geöffnetem Zugang zur Einlassleitung (20) geöffnet ist.

3. Kryospeichersystem nach Anspruch 1 oder 2,
**dadurch gekennzeichnet , dass** das Wechselventil (26) einen integrierten Schwebekörper (28) aufweist, wobei das Eigengewicht des Schwebekörpers (28) den Schwebekörper (28) in einer unteren End-Position hält, so dass die Einlassleitung (20) zur Befüllung des Innentanks (1) freigegeben ist, wobei bei einer Inbetriebnahme der Kryopumpe (21) der Schwebekörper (28) durch den Förderstrom angehoben wird, so dass er die Einlassleitung (20) zum Innentank (1) verschließt und der Förderstrom ausschließlich zum Verbraucher (5) gepumpt wird.

4. Kryospeichersystem nach zumindest einem der vorhergehenden Ansprüche,
**dadurch gekennzeichnet , dass** die Kryopumpe (21) als Linearpumpe ausgebildet ist, die beidseitig fördert.

5. Kryospeichersystem nach Anspruch 4,
**dadurch gekennzeichnet , dass** der linke und/oder der rechte Förderstrom der Linearpumpe dazu ausgebildet ist, wahlweise gasförmigen oder flüssigen Wasserstoff zu fördern, bevorzugt über ein pumpnahes Absperrventil (23) für das Umschalten von gasförmigem auf flüssigen Wasserstoff.

6. Kryospeichersystem nach zumindest einem der vorhergehenden Ansprüche,
**dadurch gekennzeichnet , dass** der Kryobehälter dazu eingerichtet ist, dass ein Teilstrom des erwärmten Wasserstoffs, also des entnommenen Wasserstoffs nach einem Wärmeübertrager (7), über eine Gasrückführleitung (6) in den Innentank (1) zurückgeführt werden kann, um den Innentankdruck zu erhöhen, bevorzugt über ein Absperrventil (13) für die Gasrückführung zum Innentank (1).

7. Kryospeichersystem nach Anspruch 6,
**dadurch gekennzeichnet , dass** ein Druckminderer (9), bevorzugt mit nachgeschaltetem Drucksicherheitsventil (10), in der Gasrückführleitung (6) für die Gasrückführung zum Innentank (1) verbaut ist.

8. Kryospeichersystem nach zumindest einem der vorhergehenden Ansprüche,
**dadurch gekennzeichnet , dass** zwischen der Kryopumpe (21) und dem Verbraucher (5) ein Pufferbehälter (8) für warmen Wasserstoff angeordnet ist.

## Claims

1. Cryostorage system, comprising a cryocontainer for storing hydrogen, having an inner tank (1) and an outer container (2), wherein at least one cryopump (21) is arranged in the inner tank (1) of the cryocontainer, the cryopump (21) delivering liquid and/or gaseous hydrogen in one or more stages via an extraction line (27) to a consumer (5) at a pressure higher than the pressure in the inner tank (1), the inner tank (1) being capable of being filled via a filling interface (14), **characterized in that** the filling taking place at least in part via the extraction line (27), and the filling taking place via a shuttle valve (26) into the inner tank (1) wherein the shuttle valve (26) is arranged in a pressure line (22) of the cryopump (21), which takes off the delivered medium, the pressure line (22) which takes off the delivered medium joining at the shuttle valve (26) with an inlet line (20) into the inner tank (1) so that at the shuttle valve (26), depending on the state of the shuttle valve (26), either the access to the pressure line (22) is opened and the access to the inlet line (20) is closed, or the access to the pressure line (22) is closed and the access to the inlet line (20) is opened.

2. Cryostorage system according to Claim1,
**characterized in that** the shuttle valve has an access to the extraction line (27), which is opened both when access to the pressure line (22) is opened and when access to the inlet line (20) is opened.

3. Cryostorage system according to Claim 1 or 2,
**characterized in that** the shuttle valve (26) has an integrated float (28), the inherent weight of the float (28) keeping the float (28) in a lower end position so that the inlet line (20) for filling the inner tank (1) is uncovered, the float (28) being raised by the delivery flow when the cryopump (21) is started so that it blocks the inlet line (20) to the inner tank (1) and the delivery flow is pumped only to the consumer (5).

4. Cryostorage system according to at least one of the precedingclaims, **characterized in that** the cryopump (21) is configured as a linear pump which delivers on both sides.

5. Cryostorage system according to Claim 6,
**characterized in that** the left and/or right delivery flow of the linear pump is configured selectively to deliver gaseous or liquid hydrogen, preferentially via a check valve (23) near to the pump for switching from gaseous to liquid hydrogen.

6. Cryostorage system according to at least one of the preceding claims,
**characterized in that** the cryocontainer is adapted so that a partial flow of the warmed hydrogen, i.e. the extracted hydrogen downstream of a heat exchanger (7), can be returned via a gas return line (6) into the inner tank (1) in order to increase the inner tank pressure, preferentially via a check valve (13) for the gas return to the inner tank (1).

7. Cryostorage system according to Claim 8,
**characterized in that** a pressure reducer (9), preferentially with a downstream pressure safety valve (10), is installed in the gas return line (6) for the gas return to the inner tank (1).

8. Cryostorage system according to at least one of the preceding claims,
**characterized in that** a buffer container (8) for warm hydrogen is arranged between the cryopump (21) and the consumer (5).

## Revendications

1. Système de stockage cryogénique, comprenant un contenant cryogénique destiné à stocker de l'hydrogène, avec un réservoir intérieur (1) et un contenant extérieur (2),
au moins une pompe cryogénique (21) étant disposée dans le réservoir intérieur (1) du contenant cryogénique, la pompe cryogénique (21) refoulant de l'hydrogène liquide et/ou gazeux en une ou plusieurs étapes par une conduite de prélèvement (27) à un consommateur (5), à une pression plus élevée que la pression dans le réservoir intérieur (1), le réservoir intérieur (1) pouvant être ravitaillé par une interface de ravitaillement (14),
**caractérisé en ce que** le ravitaillement est effectué au moins par endroits par la conduite de prélèvement (27), et
que le ravitaillement est effectué dans le réservoir intérieur (1) par un sélecteur de circuit (26), le sélecteur de circuit (26) étant disposé dans une conduite de pression (22), évacuant le milieu refoulé, de la pompe cryogénique (21), la conduite de pression (22) évacuant le milieu refoulé rejoignant sur le sélecteur de circuit (26) une conduite d'admission (20) dans le réservoir intérieur (1) de telle sorte que selon l'état du sélecteur de circuit (26), soit l'accès à la conduite de pression (22) est ouvert et l'accès à la conduite d'admission (20) est fermé, soit l'accès à la conduite de pression (22) est fermé et l'accès à la conduite d'admission (20) est ouvert sur le sélecteur de circuit (26).

2. Système de stockage cryogénique selon la revendication 1,
**caractérisé en ce que** le sélecteur de circuit comporte un accès à la conduite de prélèvement (27), qui est ouvert à la fois lorsque l'accès à la conduite de pression (22) est ouvert et que l'accès à la conduite d'admission (20) est ouvert.

3. Système de stockage cryogénique selon la revendication 1 ou 2,
**caractérisé en ce que** le sélecteur de circuit (26) comporte un corps flottant (28) intégré, le propre poids du corps flottant (28) maintenant le corps flottant (28) dans une position d'extrémité inférieure de telle sorte que la conduite d'admission (20) est dégagée pour remplir le réservoir intérieur (1),le corps flottant (28) étant relevé par le flux de refoulement lors d'une mise en service de la pompe cryogénique (21) de telle sorte qu'il ferme la conduite d'admission (20) menant au réservoir intérieur (1) et le flux de refoulement est pompé exclusivement vers le consommateur (5).

4. Système de stockage cryogénique selon au moins l'une des revendications précédentes,
**caractérisé en ce que** la pompe cryogénique (21) est réalisée comme une pompe linéaire, qui refoule du fluide des deux côtés.

5. Système de stockage cryogénique selon la revendication 4,
**caractérisé en ce que** le flux de refoulement gauche et/ou le flux de refoulement droit de la pompe linéaire sont réalisés pour refouler au choix de l'hydrogène gazeux ou liquide de manière préférée par une soupape d'arrêt (23) proche de la pompe pour passer de l'hydrogène gazeux à l'hydrogène liquide.

6. Système de stockage cryogénique selon au moins l'une des revendications précédentes,
**caractérisé en ce que** le contenant cryogénique est mis au point pour pouvoir ramener un flux partiel de l'hydrogène chauffé, donc de l'hydrogène prélevé après un échangeur de chaleur (7), par une conduite de retour de gaz (6) dans le réservoir intérieur (1) pour augmenter la pression de réservoir intérieur, de manière préférée par une soupape d'arrêt (13) pour le retour de gaz au réservoir intérieur (1).

7. Système de stockage cryogénique selon la revendication 6,
**caractérisé en ce qu'**un réducteur de pression (9), de manière préférée avec une soupape de sécurité de pression (10) montée en aval, est monté dans la conduite de retour de gaz (6) pour le retour de gaz vers le réservoir intérieur (1).

8. Système de stockage cryogénique selon au moins l'une des revendications précédentes,
**caractérisé en ce qu'**un contenant tampon (8) pour de l'hydrogène chaud est disposé entre la pompe cryogénique (21) et le consommateur (5).
